# EUROPÄISCHE PATENTSCHRIFT

(11) **EP 3 658 432 B1**
(45) Veröffentlichungstag und Bekanntmachung des Hinweises auf die Patenterteilung: **24.03.2021**
(21) Anmeldenummer: 18746647.9
(22) Anmeldetag: 19.07.2018
(51) Int. Cl.: B60T 17/02, B60T 8/36

(54) **STEUERGERÄT-AKTOR-BAUEINHEIT**
CONTROL APPARATUS-ACTUATOR UNIT
UNITÉ CALCULATEUR/ACTIONNEUR

(30) Priorität: 25.07.2017 DE 102017212708
(43) Veröffentlichungstag der Anmeldung: 03.06.2020
(73) Patentinhaber: Robert Bosch GmbH, 70442 Stuttgart (DE)
(72) Erfinder: PRUKSCH, Achim, 74861 Neudenau (DE); SCHUMACHER, Joerg Martin, 70599 Stuttgart (DE); HOESS, Stefan, 74394 Hessigheim (DE)
(86) Internationale Anmeldenummer: PCT/EP2018/069570
(87) Internationale Veröffentlichungsnummer: WO 2019/020475

(56) Entgegenhaltungen:
- WO-A1-01/14190
- DE-A1-102007 036 959
- DE-A1-102012 203 209
- JP-A- 2011 011 655

## Beschreibung

Die Erfindung bezieht sich auf eine Steuergerät-Aktor-Baueinheit, insbesondere für ein Bremssystem in einem Fahrzeug, mit einem Steuergerät und einem Aktor, die miteinander verbunden sind, sowie mit einer Sensorik, die in der Baueinheit angeordnet ist.

### Stand der Technik

Bekannt sind ESP-Systeme (Elektronisches Stabilitätsprogramm), mit denen zur Fahrzeugstabilisierung selbsttätig in das Bremssystem des Fahrzeugs eingegriffen werden kann. Die Hardware des ESP-Systems umfasst ein Hydraulikaggregat und ein Steuergerät, das mit dem Gehäuse des Hydraulikaggregats verbunden ist und mit diesem eine gemeinsame Baueinheit bildet. Dem Steuergerät werden Sensorinformationen zugeführt, die von externen Sensoren wie einem Raddrehzahlsensor und einem Lenkwinkelsensor stammen. Darüber hinaus ist die Baueinheit Träger eines Drehraten- und eines Querbeschleunigungssensors zur Bestimmung des Ist-Zustandes des Fahrzeuges, die sich auf einer Leiterplatte des Steuergerätes der Baueinheit befinden

DE 10 2012 203209 A1 offenbart eine Fahrzeugsensoreinrichtung, die Sensoren zur Erfassung der Gierrate und der Querbeschleunigung eines Fahrzeugs, eine Recheneinheit und eine Schnittstelle eines Datenbusses, über den die Sensorsignale oder aus diesen ermittelte Sensordaten einem elektronischen Steuergerät übermittelt werden können, umfasst. Ein Lenkwinkelsensor ist mit den anderen Sensoren in einem Gehäuse integriert, und die Recheneinheit nimmt eine Plausibilisierung und/oder Kalibrierung der Gierratensignale und/oder der Querbeschleunigungsignale und/oder der Lenkwinkelsignale vor.

### Offenbarung der Erfindung

Die erfindungsgemäße Steuergerät-Aktor-Baueinheit wird vorzugsweise in Fahrzeugen eingesetzt, beispielsweise in einem Bremssystem des Fahrzeugs zur Einstellung des Hydraulikdrucks. Die Baueinheit umfasst ein Steuergerät und einen Aktor, die miteinander verbunden sind und gemeinsam am dafür vorgesehenen Ort, insbesondere im Bremssystem des Fahrzeugs eingebaut werden. Bei der Steuergerät-Aktor-Baueinheit handelt es sich beispielsweise um eine ESP-Baueinheit mit einer Hydraulikeinheit und einem zugeordneten Steuergerät zur Ansteuerung der Hydraulikeinheit oder um eine sogenannte Integrated Power Brake (IPB), deren Aktor eine Elektrohydraulikeinheit und eine Ventileinheit umfasst und mit der der Hydraulikdruck bei einer Bremsanforderung durch den Fahrer oder ein Fahrerassistenzsystem im Bremssystem eingestellt wird. Die Integrated Power Brake kann einen Bremsflüssigkeitsbehälter zur Aufnahme von Bremsfluid umfassen.

Sowohl bei der ESP-Baueinheit als auch bei der Integrated Power Brake sind die Aktoren elektrohydraulisch ausgebildet, indem ein Elektromotor eine Hydraulikpumpe (ESP) bzw. einen Hydraulikzylinder bzw. Plunger (IPB) antreibt.

Die Steuergerät-Aktor-Baueinheit ist mit einer Sensorik versehen, die Teil der Baueinheit ist und in Signalverbindung mit dem Steuergerät steht. Die in der Sensorik aufgenommenen Sensordaten werden auf das Steuergerät übertragen und im Steuergerät weiterverarbeitet, insbesondere zur Erzeugung von Stellsignalen für den Aktor. Gegebenenfalls ist auch eine Signal- oder Stromübertragung von dem Steuergerät auf die Sensorik möglich.

Gemäß einer zweckmäßigen Ausführung handelt es sich bei der Sensorik in der Baueinheit um eine Inertialsensorik mit einem Drehratensensor und mindestens einem Beschleunigungssensor, vorzugsweise zur Messung der Querbeschleunigung, gegebenenfalls auch zusätzlich zur Messung der Längsbeschleunigung. Mithilfe des Drehratensensors kann die aktuelle Bewegung der Baueinheit um die Hochachse ermittelt werden. Bei einem Einbau der Baueinheit in ein Fahrzeug handelt es sich somit um die Ermittlung der Gierbewegung mithilfe des Drehratensensors und um die Ermittlung der Fahrzeugquerbeschleunigung sowie gegebenenfalls der Fahrzeuglängsbeschleunigung.

Die Sensorik weist einen Trägerkörper auf, in welchem mindestens ein Sensor der Sensorik aufgenommen ist. In oder an dem Trägerkörper befindet sich mindestens ein Signalübertragungskontaktsegment, über das die Signalübertragung zwischen der Sensorik und dem Steuergerät erfolgt. Das Signalübertragungskontaktsegment ist, bezogen auf eine Achse des Trägerkörpers, bogenförmig ausgebildet, insbesondere kreisförmig.

Diese Achse des Trägerkörpers bildet zugleich eine Drehachse des Trägerkörpers. Der Trägerkörper ist in verschiedenen Winkelpositionen um die Drehachse an einem Bauteil der Baueinheit befestigbar.

Diese Ausführung ermöglicht es, in diversen Einbaulagen der Steuergerät-Aktor-Baueinheit die Sensorik an einem Koordinatensystem der Einrichtung oder Vorrichtung auszurichten, die in die Baueinheit integriert wird. So ist es beispielsweise möglich, bei einem Einbau der Baueinheit in ein Bremssystem in einem Fahrzeug die Sensorik an dem Koordinatensystem des Fahrzeugs auszurichten, wobei die Baueinheit in verschiedenen Einbaulagen in das Fahrzeug bzw. das Bremssystem des Fahrzeugs integriert werden kann. Es ist insbesondere möglich, sich an der Querachse des Fahrzeugs auszurichten und die Baueinheit in verschiedenen Winkellagen bezogen auf die Querachse des Fahrzeugs einzubauen und zugleich sicherzustellen, durch Verdrehen des Trägerkörpers der Sensorik um die Trägerkörper-Drehachse, die gegebenenfalls mit der Querachse des Fahrzeugs zusammenfällt, die Sensorik in eine gewünschte Winkellage bezogen auf das Koordinatensystem des Fahrzeugs zu bringen. Dies ermöglicht es, unabhängig oder zumindest weitgehend unabhängig von der Winkeleinbaulage der Baueinheit im Fahrzeug über die Sensorik Fahrzustandsgrößen im Fahrzeugkoordinatensystem zu ermitteln. Verfälschungen der Sensorsignale, die bei einer schiefwinkligen Einbausituation der Sensorik im Fahrzeug entstehen können, werden hierdurch vermieden.

Ungeachtet der aktuellen Winkellage der Sensorik in der Baueinheit ist eine sichere Signalübertragung zwischen der Sensorik und dem Steuergerät möglich. Das Steuergerät befindet sich in einer fixen Position am Aktor, die Relativwinkellage zwischen dem Steuergerät und dem Aktor ist spezifikationsabhängig und üblicherweise nicht veränderbar. Um dennoch auch bei schiefwinkliger Einbausituation der Baueinheit einerseits und einer Kompensation der schiefwinkligen Einbaulage durch Verdrehen der Sensorik andererseits eine sichere Signalübertragung zu gewährleisten, ist das Signalübertragungskontaktsegment bogenförmig, insbesondere kreisförmig bzw. teilkreisförmig ausgebildet. Dies ermöglicht es, entlang der gesamten Fläche des Signalübertragungskontaktsegments einen Kontakt mit dem Steuergerät herzustellen. Vorteilhafterweise gelangt ein Gegenkontakt, der fest mit dem Steuergerät verbunden ist und zu einer Leiterplatte im Steuergerät führt, in Berührkontakt mit dem Signalübertragungskontaktsegment der Sensorik. Der Berührkontakt ist über die gesamte bogenförmige Fläche, die sich um die Drehachse des Trägerkörpers erstreckt, zwischen dem Gegenkontakt und dem Signalübertragungskontaktsegment möglich.

Gemäß einer vorteilhaften Ausführung sind mindestens zwei Signalübertragungskontaktsegmente an der Sensorik angeordnet, die winkelversetzt zueinander positioniert sind. Es können gegebenenfalls mehr als zwei Signalübertragungskontaktsegmente vorgesehen sein, beispielsweise über den Umfang verteilt vier Signalübertragungskontaktsegmente. Sofern mehrere Signalübertragungskontaktsegmente vorgesehen sind, erstrecken sich diese vorteilhafterweise jeweils über den gleichen Segmentwinkel. In bevorzugter Ausführung erstrecken sich die Signalübertragungskontaktsegmente insgesamt über 360° und damit entlang eines umlaufenden, geschlossenen Kreises. Zwischen zwei aneinandergrenzenden Signalübertragungskontaktsegmenten kann sich ein elektrisch nichtleitender Trennsteg befinden. Der Anzahl an Signalübertragungskontaktsegmenten entsprechend kann eine unterschiedliche Anzahl an verschiedenen Sensorsignalen zwischen der Sensorik und dem Steuergerät übertragen werden.

Gemäß einer weiteren vorteilhaften Ausführung ist an dem Trägerkörper ein weiteres, zentrisch angeordnetes, in der Drehachse liegendes Signalübertragungskontaktsegment angeordnet, über das ebenfalls eine Signalübertragung zwischen der Sensorik und dem Steuergerät möglich ist. Über dieses zentrale Signalübertragungskontaktsegment gruppieren sich die bogen- bzw. kreisförmigen Signalübertragungskontaktsegmente. Sämtliche Signalübertragungskontaktsegmente sind elektrisch voneinander isoliert, beispielsweise über elektrisch isolierende Trennstege.

Des Weiteren ist es zweckmäßig, dass sämtliche Signalübertragungskontaktsegmente in einer gemeinsamen Ebene einer Kontaktfläche liegen. Diese Ebene erstreckt sich vorzugsweise orthogonal zur Drehachse des Trägerkörpers. In einer alternativen Ausführung liegen die Signalübertragungskontaktsegmente in verschiedenen Ebenen der Kontaktfläche.

Gemäß noch einer weiteren vorteilhaften Ausführung ist der Trägerkörper als eine Trägerhülse ausgebildet, wobei die Drehachse von der Längsachse der Trägerhülse gebildet ist. In dem hülsenförmigen Trägerkörper befinden sich ein oder mehrere Sensoren der Sensorik, insbesondere auf einer Sensorik-Leiterplatte, mit der die Signalübertragungskontaktsegmente elektrisch verbunden sind. Die Signalübertragungskontaktsegmente liegen vorteilhafterweise außerhalb des Trägerkörpers, insbesondere der Trägerhülse, beispielsweise vorgelagert zur Stirnseite der Trägerhülse.

Gemäß noch einer weiteren zweckmäßigen Ausführung ist der Trägerkörper am Gehäuse des Aktors verdrehbar angeordnet. Die Verdrehbarkeit ist beispielsweise dadurch gegeben, dass der Trägerkörper in eine Ausnehmung eingesetzt ist, die in das Gehäuse des Aktors auf der dem Steuergerät zugewandten Seite eingebracht ist. Mit dem Zusammenfügen von Steuergerät und Aktor gelangen die Signalübertragungskontaktsegmente in elektrische Signalverbindung mit dem Steuergerät, wobei über eine Verdrehung des Trägerkörpers eine eventuell schiefwinklige Einbaulage der Baueinheit kompensiert wird. Der Trägerkörper der Sensorik kann beispielsweise in die Ausnehmung im Gehäuse des Aktors eingeschraubt oder in der Ausnehmung verstellt werden.

Die Sensorik befindet sich vorzugsweise außerhalb des Gehäuses des Steuergerätes und steht außerhalb des Gehäuses des Steuergerätes in Signalverbindung mit dem Steuergerät. Es sind auch Ausführungen möglich, bei denen das mindestens eine Signalübertragungskontaktsegment in das Gehäuse des Steuergerätes hineinragt.

Die Erfindung bezieht sich des Weiteren auf ein Steuergerät, das Bestandteil der Steuergerät-Aktor-Baueinheit ist. Das Steuergerät umfasst ein Steuergerätgehäuse und eine darin aufgenommene Leiterplatte, mit der die Sensorik in Signalverbindung steht.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer Steuergerät-Aktor-Baueinheit, die als eine Integrated Power Brake mit einem Elektromotor als Aktor, einem Steuergerät und einem Ventilgehäuse ausgebildet ist,
- Fig. 2: eine Darstellung eines Fahrzeugs mit dem Fahrzeugkoordinatensystem, wobei in das Bremssystem des Fahrzeugs die Steuergerät-Aktor-Baueinheit gemäß Fig. 1 eingebaut ist,
- Fig. 3: die Steuergerät-Aktor-Baueinheit aus Fig. 1 in Seitendarstellung, jedoch ohne Steuergerät, mit einer Sensorik am Ventilgehäuse, wobei eine Trägerhülse der Sensorik in verschiedenen Winkelpositionen am Ventilgehäuse montierbar ist,
- Fig. 4: eine Darstellung gemäß Fig. 3, jedoch in einer winkelverdrehten Lage der Steuergerät-Aktor-Baueinheit,
- Fig. 5: eine Draufsicht auf die Sensorik mit mehreren Signalübertragungskontaktsegmenten zur Signalübertragung zwischen Sensorik und Steuergerät,
- Fig. 6: einen Schnitt längs durch die Trägerhülse der Sensorik.

In den Figuren sind gleiche Bauteile mit gleichen Bezugszeichen versehen.

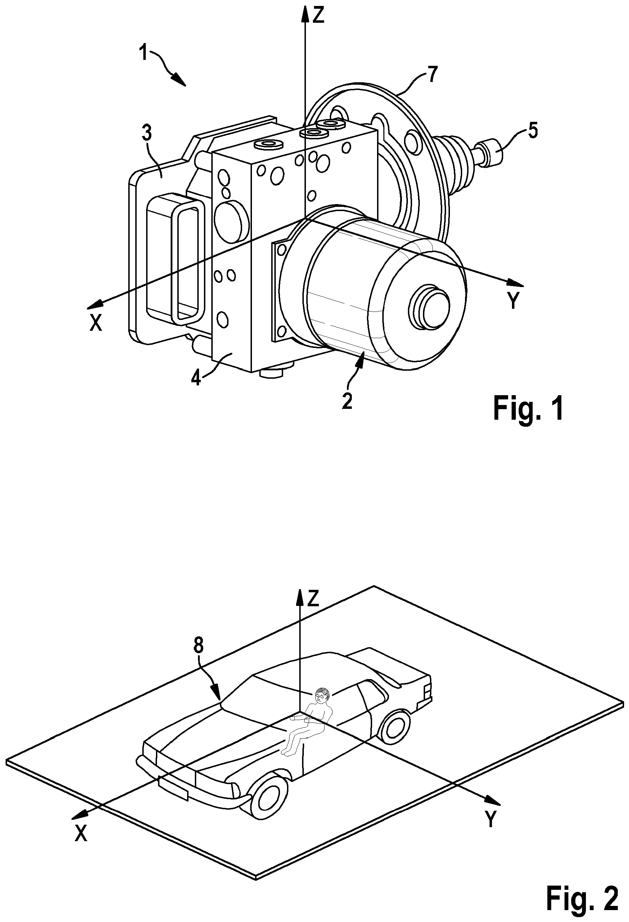

Bei der in den Fig. 1, 3 und 4 dargestellten Steuergerät-Aktor-Baueinheit 1 handelt es sich um eine Integrated Power Brake (IPB), die in einem hydraulischen Bremssystem in einem Fahrzeug einsetzbar ist. Mithilfe der Steuergerät-Aktor-Baueinheit kann sowohl eine Bremskraftverstärkung als auch eine Fahrzeugstabilisierung durch Modulation des hydraulischen Bremsdrucks an Radbremseinheiten des Fahrzeugs durchgeführt werden.

Die Baueinheit 1 umfasst einen Aktor 2, der als Elektrohydraulikeinheit mit einem Elektromotor ausgebildet ist, sowie ein Steuergerät 3, das an einem Gehäuse 4 des Aktors 2 gehalten ist. Das Gehäuse 4 umfasst ein Ventilgehäuse.

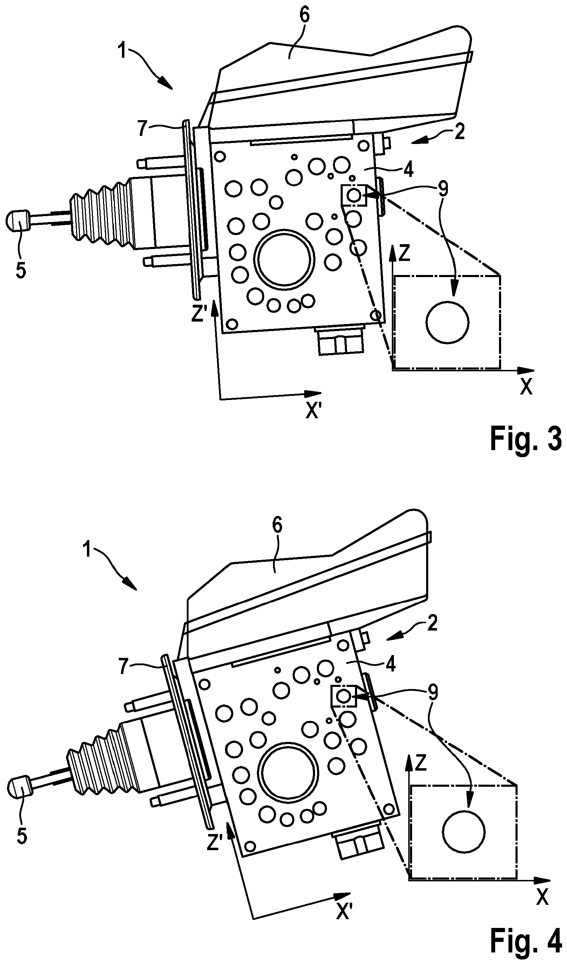

Des Weiteren gehört zu der Baueinheit 1 ein Übertragungselement 5, das mit dem Bremspedal im Fahrzeug gekoppelt ist und eine Bremspedalbewegung in eine Stellbewegung des Übertragungselementes 5 überträgt, woraufhin die Elektrohydraulikeinheit 2 betätigt und der hydraulische Bremsdruck im Bremssystem moduliert wird. Zur Baueinheit 1 gehört des Weiteren ein Bremsflüssigkeitsbehälter 6, der am Gehäuse 4 befestigt ist und Bremsflüssigkeit aufnimmt (Fig. 3, 4). Die Befestigung der Baueinheit 1 im Bremssystem erfolgt über eine Befestigungsscheibe 7, die an dem Gehäuse 4 angeordnet ist.

In Fig. 2 ist ein Fahrzeug 8 dargestellt, dessen Koordinatensystem die Fahrzeuglängsachse x, die Fahrzeugquerachse y und die Fahrzeughochachse z umfasst. Das fahrzeugeigene Koordinatensystem x, y, z ist auch in Fig. 1 in der Baueinheit 1 eingetragen zur Verdeutlichung der Einbaulage der Baueinheit 1 im Fahrzeug 8. Das stangenförmige Übertragungselement 5 verläuft zumindest annähernd parallel zur Fahrzeuglängsachse x, die Längsachse des Elektromotors verläuft zumindest annähernd parallel zur Fahrzeugquerachse y.

In den Fig. 3 und 4 ist die Baueinheit 1 ohne Steuergerät 3 dargestellt. Auf derjenigen Seite des Gehäuses 4, die üblicherweise das Steuergerät 3 aufnimmt, befindet sich eine Sensorik 9, bei der es sich insbesondere um eine Inertialsensorik mit einem Drehratensensor und einem oder mehreren Beschleunigungssensoren handelt. Als Beschleunigungen können mit der Sensorik 9 zumindest die Querbeschleunigung, gegebenenfalls auch die Längsbeschleunigung ermittelt werden. Die Sensorik 9 ist am Gehäuse 4 des Aktors 2 befestigt und steht zur Signalübertragung in Kontakt mit dem Steuergerät 3.

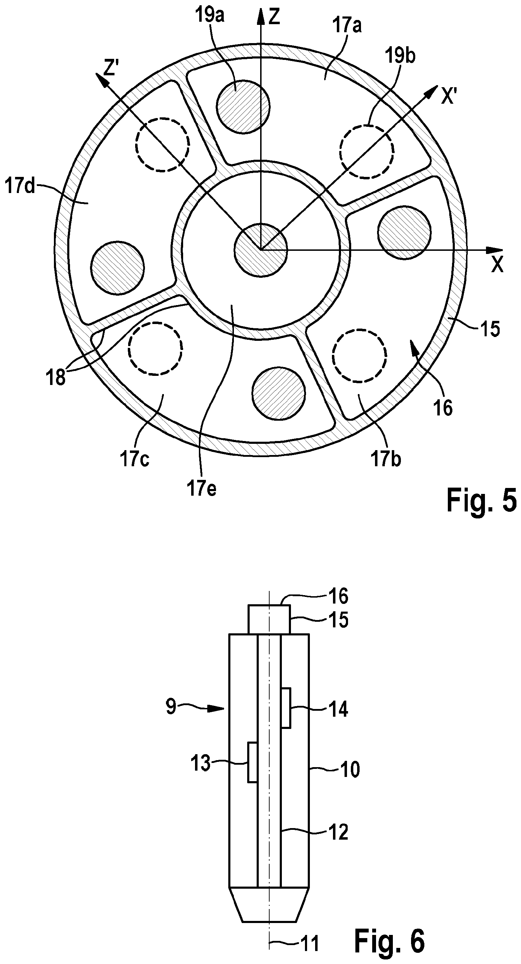

Die Sensorik 9 weist, wie insbesondere Fig. 6 zu entnehmen, eine beispielsweise zylindrische Trägerhülse 10 als Trägerkörper auf, in der eine Sensorik-Leiterplatte 12 mit Sensoren 13 und 14 aufgenommen ist. Bei den Sensoren 13 und 14 handelt es sich um die Sensoren der Inertialsensorik; gegebenenfalls können noch weitere Sensoren, beispielsweise ein Drucksensor, auf der Sensorik-Leiterplatte 12 aufgenommen sein. Die Längsachse der Trägerhülse 10 ist mit Bezugszeichen 11 gekennzeichnet.

Die Trägerhülse 10 der Sensorik 9 ist in der Weise an dem Gehäuse 4 angeordnet, dass die Längsachse 11 der Trägerhülse 10 zumindest annähernd orthogonal zur geradflächigen, ebenen Außenseite des Gehäuses 4 steht. Zugleich ist die Trägerhülse 10 um die Längsachse 11 verdrehbar am Gehäuse 4 aufgenommen, so dass die Längsachse 11 zugleich eine Drehachse der Trägerhülse 10 und damit der Sensorik 9 bildet.

Im Ausführungsbeispiel gemäß Fig. 3 und 4 fällt die Dreh- bzw. Längsachse 11 der Sensorik 9 mit der Fahrzeugquerachse y zusammen. Durch die Verdrehbarkeit der Sensorik 9 am Gehäuse 4 ist es möglich, die Sensorik 9 in der Weise auszurichten, dass die x- und z-Achse der Sensorik 9 exakt mit der Fahrzeuglängsachse x und der Fahrzeughochachse z (Fig. 2) zusammenfallen, ungeachtet der Einbaulage der Baueinheit 1, deren Koordinatensystem in Fig. 3 und 4 mit der Längsachse x' und der Hochachse z' gekennzeichnet ist. Gemäß Fig. 3 fallen die Koordinatensysteme der Sensorik 9 und der Baueinheit 1 durch Verdrehen um die Querachse geringfügig auseinander, der Verdrehwinkel um die Querachse liegt in der Größenordnung von maximal 5°. In Fig. 4 fallen die Koordinatensysteme von Sensorik 9 und Baueinheit 1 stärker auseinander, der Verdrehwinkel um die Querachse liegt in der Größenordnung von bis zu 20°. Diese Relativverdrehung zwischen der Baueinheit 1 und der Sensorik 9 ermöglicht es, unabhängig von der Einbaulage der Baueinheit 1 die Sensorik 9 auf das Koordinatensystem des Fahrzeugs 8 auszurichten, wodurch ein Fehler in den Sensorsignalen der Sensorik 9 vermieden wird.

Wie Fig. 5 in Verbindung mit Fig. 6 zu entnehmen, befindet sich benachbart zur obenliegenden Stirnseite an der Trägerhülse 10 ein Kontaktabschnitt 15, dessen freie Stirnfläche eine Kontaktfläche 16 bildet, über die die Signalübertragung zwischen der Sensorik 9 und dem Steuergerät 3 erfolgt. Die ebene Kontaktfläche 16 am Kontaktabschnitt 15 ist in mehrere Signalübertragungskontaktsegmente 17a bis 17e unterteilt. Jedes Signalübertragungskontaktsegment 17 ist elektrisch leitend ausgebildet, wobei die verschiedenen Signalübertragungskontaktsegmente über Trennstege 18 elektrisch voneinander separiert sind. Im montierten Zustand werden die Signalübertragungskontaktsegmente 17 von Gegenkontakten am Steuergerät 3 kontaktiert, um einen Signalübertragungsweg zwischen der Sensorik 9 und dem Steuergerät 3 herzustellen. Vorteilhafterweise ist jedes Signalübertragungskontaktsegment 17a bis 17e mit dem Steuergerät verbunden.

Die außenliegenden Signalübertragungskontaktsegmente 17a bis 17d sind jeweils kreisförmig angeordnet und erstrecken sich jeweils über ein Winkelsegment von 90°. Das innenliegende, zentrische Signalübertragungskontaktsegment 17e wird von der Drehachse geschnitten und ist von den außenliegenden, kreisförmigen Kontaktsegmenten 17a bis 17d umschlossen.

In den außenliegenden Signalübertragungskontaktsegmenten 17a bis 17d sind jeweils zwei Kontaktpunkte 19a, 19b dargestellt, von denen der erste Kontaktpunkt 19a schraffiert und der zweite Kontaktpunkt 19b mit gestrichelter Umrandung eingezeichnet sind. Die Kontaktpunkte 19a, 19b stellen Beispiele für die Kontaktierung mit den steuergeräteseitigen Gegenkontakten dar. Die Kontaktpunkte 19a und 19b verdeutlichen, dass innerhalb der gesamten Fläche eines Signalübertragungskontaktsegmentes eine Signalübertragung zum Steuergerät möglich ist. Da sich jedes außenliegende Signalübertragungskontaktsegment 17a bis 17d über ein Winkelsegment von 90° erstreckt, kann die Trägerhülse 10 der Sensorik 9 um ihre Längs- bzw. Drehachse 11 um annähernd 90° verdreht werden, wobei innerhalb dieses Verdrehwinkels der Kontakt des betreffenden Signalübertragungskontaktsegmentes 17a bis 17d mit dem Gegenkontakt am Steuergerät erhalten bleibt. Somit beträgt der Winkel im Ausführungsbeispiel gemäß Fig. 5, um den die Sensorik 9 um ihre Längsachse am Gehäuse verdreht werden kann, annähernd 90°.

## Patentansprüche

1. Steuergerät-Aktor-Baueinheit, insbesondere für ein Bremssystem in einem Fahrzeug (8), mit einem Steuergerät (3) und einem Aktor (2), die miteinander verbunden sind, und mit einer Sensorik (9) in der Baueinheit (1), **dadurch gekennzeichnet, dass** die Sensorik (9) mindestens ein Signalübertragungskontaktsegment (17) in oder an einem Trägerkörper (10) der Sensorik (9) zur Sensorsignalübertragung auf das Steuergerät (3) aufweist und das Signalübertragungskontaktsegment (17) bezogen auf eine Achse des Trägerkörpers (10) bogenförmig ausgebildet ist, wobei die Achse des Trägerkörpers (10) eine Drehachse (11) bildet und der Trägerkörper (10) in verschiedenen Winkelpositionen um die Drehachse (11) an einem Bauteil der Baueinheit (1) befestigbar ist.

2. Baueinheit nach Anspruch 1, **dadurch gekennzeichnet, dass** mindestens zwei Signalübertragungskontaktsegmente (17) um die Drehachse (11) des Trägerkörpers (10) der Sensorik (9) winkelversetzt zueinander angeordnet sind.

3. Baueinheit nach Anspruch 2, **dadurch gekennzeichnet, dass** die mindestens zwei Signalübertragungskontaktsegmente (17) sich insgesamt über 360° erstrecken.

4. Baueinheit nach einem der Ansprüche 1 bis 3, **dadurch gekennzeichnet, dass** in oder an dem Trägerkörper (10) ein zentrales, in der Drehachse (11) liegendes Signalübertragungskontaktsegment (17) angeordnet ist.

5. Baueinheit nach einem der Ansprüche 1 bis 4, **dadurch gekennzeichnet, dass** sämtliche Signalübertragungskontaktsegmente (17) in einer gemeinsamen Ebene angeordnet sind.

6. Baueinheit nach einem der Ansprüche 1 bis 5, **dadurch gekennzeichnet, dass** der Trägerkörper (10) der Sensorik (9) als Trägerhülse ausgebildet und die Drehachse (11) von der Längsachse der Trägerhülse (10) gebildet ist.

7. Baueinheit nach einem der Ansprüche 1 bis 6, **dadurch gekennzeichnet, dass** der Trägerkörper (10) der Sensorik (9) am Gehäuse (4) des Aktors in verschiedenen Winkelpositionen montierbar ist.

8. Baueinheit nach Anspruch 7, **dadurch gekennzeichnet, dass** der Trägerkörper (10) der Sensorik (9) in eine Ausnehmung im Gehäuse (4) des Aktors verdrehbar eingesetzt ist.

9. Baueinheit nach einem der Ansprüche 1 bis 8 in einem Bremssystem in einem Fahrzeug (8), **dadurch gekennzeichnet, dass** die Drehachse (11) des Trägerkörpers (10) der Sensorik (9) parallel zur Querachse des Fahrzeugs (8) verläuft.

10. Baueinheit nach einem der Ansprüche 1 bis 9 in einem Bremssystem in einem Fahrzeug (8), **dadurch gekennzeichnet, dass** ein Bremsflüssigkeitsbehälter (6) am Gehäuse (4) des Aktors angeordnet ist.

11. Baueinheit nach einem der Ansprüche 1 bis 10, **dadurch gekennzeichnet, dass** der Aktor elektrohydraulisch ausgebildet ist.

12. Steuergerät für eine Baueinheit (1) nach einem der Ansprüche 1 bis 11.

## Claims

1. Controllable apparatus actuator unit, in particular for a brake system in a vehicle (8), having a control apparatus (3) and an actuator (2) which are connected to one another, and having a sensor system (9) in the unit (1), **characterized in that** the sensor system (9) has at least one signal-transmission contact segment (17) in or on a carrier body (10) of the sensor system (9) for transmitting sensor signals to the control apparatus (3), and the signal-transmission contact segment (17) is designed in an arcuate shape with respect to an axis of the carrier body (10), wherein the axis of the carrier body (10) forms a rotational axis (11), and the carrier body (10) can be attached to a component of the unit (1) in various angular positions about the rotational axis (11).

2. Unit according to Claim 1, **characterized in that** at least two signal-transmission contact segments (17) are arranged offset with respect to one another at an angle about the rotational axis (11) of the carrier body (10) of the sensor system (9).

3. Unit according to Claim 2, **characterized in that** at least two signal-transmission contact segments (17) extend over 360° in total.

4. Unit according to one of Claims 1 to 3, **characterized in that** a central signal-transmission contact segment (17) which is located in the rotational axis (11) is arranged in or on the carrier body (10).

5. Unit according to one of Claims 1 to 4, **characterized in that** all the signal-transmission contact segments (17) are arranged in a common plane.

6. Unit according to one of Claims 1 to 5, **characterized in that** the carrier body (10) of the sensor system (9) is embodied as a carrier sleeve, and the rotational axis (11) is formed by the longitudinal axis of the carrier sleeve (10).

7. Unit according to one of Claims 1 to 6, **characterized in that** the carrier body (10) of the sensor system (9) can be mounted on the housing (4) of the actuator in various angular positions.

8. Unit according to Claim 7, **characterized in that** the carrier body (10) of the sensor system (9) is rotatably inserted into a recess in the housing (4) of the actuator.

9. Unit according to one of Claims 1 to 8 in a brake system in a vehicle (8), **characterized in that** the rotational axis (11) of the carrier body (10) of the sensor system (9) runs parallel to the transverse axis of the vehicle (8).

10. Unit according to one of Claims 1 to 9 in a brake system in a vehicle (8), **characterized in that** a brake fluid container (6) is arranged on the housing (4) of the actuator.

11. Unit according to one of Claims 1 to 10, **characterized in that** the actuator is embodied in an electrohydraulic fashion.

12. Control device for a unit (1) according to one of Claims 1 to 11.

## Revendications

1. Unité modulaire appareil de commande/actionneur, en particulier pour un système de freinage dans un véhicule (8), comprenant un appareil de commande (3) et un actionneur (2) qui sont reliés ensemble, et un système de capteurs (9) dans l'unité modulaire (1), **caractérisée en ce que** le système de capteurs (9) présente au moins un segment de contact de transmission de signaux (17) dans ou sur un corps de support (10) du système de capteurs (9) pour la transmission de signaux de capteur à l'appareil de commande (3), et le segment de contact de transmission de signaux (17) est réalisé en forme d'arc par rapport à un axe du corps de support (10), l'axe du corps de support (10) formant un axe de rotation (11), et le corps de support (10) pouvant être fixé dans différentes positions angulaires autour de l'axe de rotation (11) sur un composant de l'unité modulaire (1).

2. Unité modulaire selon la revendication 1, **caractérisée en ce qu'**au moins deux segments de contact de transmission de signaux (17) sont disposés en décalage angulaire l'un par rapport à l'autre autour de l'axe de rotation (11) du corps de support (10) du système de capteurs (9).

3. Unité modulaire selon la revendication 2, **caractérisée en ce que** les au moins deux segments de contact de transmission de signaux (17) s'étendent en tout sur 360°.

4. Unité modulaire selon l'une quelconque des revendications 1 à 3, **caractérisée en ce qu'**un segment de contact de transmission de signaux (17) central, situé sur l'axe de rotation (11), est disposé dans ou sur le corps de support (10).

5. Unité modulaire selon l'une quelconque des revendications 1 à 4, **caractérisée en ce que** tous les segments de contact de transmission de signaux (17) sont disposés dans un plan commun.

6. Unité modulaire selon l'une quelconque des revendications 1 à 5, **caractérisée en ce que** le corps de support (10) du système de capteurs (9) est formé sous la forme d'une douille de support, et l'axe de rotation (11) est formé par l'axe longitudinal de la douille de support (10).

7. Unité modulaire selon l'une quelconque des revendications 1 à 6, **caractérisée en ce que** le corps de support (10) du système de capteurs (9) peut être monté sur le boîtier (4) de l'actionneur dans différentes positions angulaires.

8. Unité modulaire selon la revendication 7, **caractérisée en ce que** le corps de support (10) du système de capteurs (9) est inséré pivotant dans un évidement dans le boîtier (4) de l'actionneur.

9. Unité modulaire selon l'une quelconque des revendications 1 à 8 dans un système de freinage dans un véhicule (8), **caractérisée en ce que** l'axe de rotation (11) du corps de support (10) du système de capteurs (9) s'étend en parallèle à l'axe transversal du véhicule (8).

10. Unité modulaire selon l'une quelconque des revendications 1 à 9 dans un système de freinage dans un véhicule (8), **caractérisée en ce qu'**un récipient de liquide de freinage (6) est disposé sur le boîtier (4) de l'actionneur.

11. Unité modulaire selon l'une quelconque des revendications 1 à 10, **caractérisée en ce que** l'actionneur est réalisé de manière électrohydraulique.

12. Appareil de commande pour une unité modulaire (1) selon l'une quelconque des revendications 1 à 11.
